# EUROPEAN PATENT APPLICATION

(11) **EP 4 817 411 A1**
(43) Date of publication of application: **07.10.2026**
(21) Application number: 26170677.4
(22) Date of filing: 02.04.2026
(51) Int. Cl.: A01K 31/17

(54) **NEST MODULE, PARTICULARLY FOR EGG-LAYING HEN FARM SYSTEMS**

(30) Priority: 04.04.2025 IT 202500007209
(71) Applicant: Officine Facco & C. S.p.A., 35010 Campo San Martino (IT)
(72) Inventor: FINCO, Massimo, 35122 PADOVA (IT); FINCO, Luca, CHICAGO, 60611 (US)
(74) Representative: Modiano, Micaela Nadia

(57) **Abstract**

A nest module (1, 101, 201, 301, 401), particularly for an egg-laying hen farm system (1000), which comprises at least one nest (2, 102, 202, 302, 402) having a rotating bottom (3, 103, 203, 303, 403) which is associated so that it can rotate with a lower end (4a, 104a, 204a, 304a, 404a) of an external wall thereof (4, 104, 204, 304, 404); the bottom (3, 103, 203, 303, 403) is hinged to the external wall (4, 104, 204, 304, 404) at a first edge (3a, 103a, 203a, 303a, 403a) thereof; at least one collection belt (8, 108, 208, 308, 408) is positioned proximate to a second edge (3b, 103b, 203b, 303b, 403b) of the bottom (3, 103, 203, 303, 403) opposite to the first edge (3a, 103a, 203a, 303a, 403a);
movement means (9, 109, 209, 309, 409) are provided for moving the bottom (3, 103, 203, 303, 403);
each nest (2, 102, 202, 302, 402) is at least partially superimposed on the collection belt (8, 108, 208, 308, 408).

## Description

The present invention relates to a nest module with a rotating bottom, particularly for egg-laying hen farm systems.

The invention can be applied in the livestock sector, preferably, but not exclusively, in the sector of poultry farm systems, in particular in systems for egg-laying hens.

In recent years, for reasons of ethics, poultry farming systems are becoming increasingly widespread in which consideration is given first and foremost to the welfare of the animal.

We are thus shifting from battery farming systems to alternative farming systems, i.e. systems wherein the animal has considerable freedom of movement both on the horizontal plane and on the vertical plane by means of perches and superimposed walkable levels.

Alternative farming systems are governed by European and Italian regulations, all of which set out a series of parameters and characteristics that must be met in order to ensure proper welfare for the animals.

As things currently stand, in Italy, for example, the principal legislation governing this area is Legislative Decree no. 267 of 29 July 2003, and in particular, for alternative systems, its Enclosure B.

The regulations set down, for example, the maximum allowable number of animals per square meter of usable surface of the system.

To define the maximum number of animals that can be contained in a farm, it is therefore necessary to calculate the total usable surface of that system.

The regulations therefore set down what the characteristics are which define a usable surface for the purposes of the above-mentioned count.

For example, among the various prescriptions, a system of the alternative type can have at most four levels which are superimposed at a distance of not less than 45 centimeters.

Each one of these levels, in order to be counted as usable surface, must be for example made in such a manner as to prevent the feces from falling onto the lower levels.

So as to optimize the yield of the farm, the need is evident to maximize the usable surface for the same ground footprint of the system.

Another point defined in the regulations concerns the need to give the animals a proper environment for laying eggs, also termed a "nest".

The nest area must be protected and separate from the rest of the environment, for example via the use of curtains, in order to ensure a minimum of privacy and calm for the animals during egg-laying.

The regulations define the minimum ratio of nests to animals, and provide some prescriptions on construction, including for example the fact that the bottom of the nest cannot be made of metallic material.

The model of nest that is best-performing from the point of view of the end quality of the eggs and of the welfare of the animals is known as the "collective nest system", an environment delimited by three closed walls, which is connected to the outside through one or more openings fitted with curtains which allow access by the animals.

The bottom of such a nest is generally a mat, made of synthetic material, which is inclined toward the collection belt where the eggs arrive through one or more slots which are present on the rotating bottom or on the wall contiguous to the collection belt.

It has been observed that, by using nest systems of this type, it is necessary to install a device for regulating access by the animals.

In fact, in order to prevent fouling of the mat, it is important to move all the animals away from the nest at determined times and have them to wait outside the nest until the next egg-laying interval.

At the moment of closure of the nest, it is of the utmost importance to evacuate the animals gently, without injuring them or traumatizing them; one method that has been found to be very effective is to use a nest with a rotating bottom.

According to this solution, the bottom of the nest can move, and is hinged at its opposite side from the side where the collection belt is located.

At the moment when the animals are evacuated from the nest, the rotating bottom is gradually lifted, slowly increasing its inclination with respect to the horizontal and forcing any animals that remain inside to exit through the openings of the nest.

Once the substantially vertical orientation is reached, the bottom is kept in this position, impeding access to the nest until such time as it is reopened.

Such conventional rotating-bottom nests are not devoid of drawbacks, including the possibility that, during the step of rotation of the bottom, some animals may get their heads stuck in the opening where the eggs exit, with fatal results.

To resolve this drawback at least partially, rotating-bottom nests have been developed which have a double inclination.

In these systems the bottom of the nest is divided into two separate planes, which converge toward one or more slots arranged at a certain distance from the collection belt.

In this manner, during the rotation of the bottom the animals can withdraw without getting their heads stuck in the wall of the nest.

However, such conventional double-inclination rotating-bottom nests require a transfer netting which supports and conveys the eggs in the path between the slot and the collection belt.

Owing to its position, this transfer netting is easily fouled and at the same time difficult to clean, so increasing the risk of causing diseases in the animals and potentially lowering the quality of the eggs which would become fouled by rolling through the feces.

A further drawback, which is common to all conventional nests, derives from the fact that the surface occupied by the nests and by their accessory elements generally does not count toward the calculation of the total usable surface.

This drawback entails a considerable decrease in the number of animals that can be farmed in a system, in that, for each nest-equipped level, its total surface must be reduced by the surface taken up by the nests, which can be arranged on only one side of the collection belt or on two mutually opposite sides of the entire surface of the collection belt, and also by the surfaces of the halt areas placed in front of the openings of each nest.

The aim of the present invention is to provide a poultry farming system of the alternative type that is capable of improving the known art in one or more of the above-mentioned aspects.

Within this aim, an object of the invention is to provide a nest module that is capable of increasing the usable surface of a farming system for the same volumetric footprint with respect to a similar, conventional nest module.

Another object of the invention is to provide a nest module that minimizes the risk of causing trauma to the animals.

A further object of the invention is to provide a nest module that is simple and easy to clean.

A still further object of the present invention is to overcome the drawbacks of the background art in a manner that is alternative to any existing solutions.

Another object of the invention is to provide a nest module that is highly reliable, easy to implement, and at low cost.

This aim and these and other objects which will become more apparent hereinafter are achieved by a nest module according to claim 1, optionally provided with one or more of the characteristics of the dependent claims.

Moreover, this aim and these and other objects which will become more apparent hereinafter are achieved by a poultry farming system on one or more levels according to claim 9, optionally provided with one or more of the characteristics of the dependent claims.

Further characteristics and advantages of the invention will become more apparent from the detailed description of a preferred, but not exclusive, embodiment of the nest module according to the invention, which is illustrated for the purposes of non-limiting example in the accompanying drawings wherein:
- Figure 1 is a schematic front elevation view of a module according to the invention in a possible embodiment thereof;
- Figure 2 is a detailed view of the module shown in Figure 1;
- Figure 3 is a perspective view of a detail of the module shown in Figure 1;
- Figure 4 is a schematic front elevation view of a module according to the invention in another possible embodiment;
- Figure 5 is a schematic front elevation view of a module according to the invention in a further possible embodiment;
- Figure 6 is a schematic front elevation view of a poultry farming system according to the invention, which comprises a module according to the invention, in a possible embodiment;
- Figure 7 is a schematic front elevation view of a module according to the invention in a further possible embodiment.

With reference to the figures, the nest module, generally designated by the reference numerals 1, 101, 201, 301, 401, comprises at least one nest 2, 102, 202, 302, 402.

Conveniently, such at least one nest 2, 102, 202, 302, 402 has a rotating bottom 3, 103, 203, 303, 403 which is associated so that it can rotate with a lower end 4a, 104a, 204a, 304a, 404a of an external wall thereof 4, 104, 204, 304, 404.

In more detail, for each nest 2, 102, 202, 302, 402, the bottom 3, 103, 203, 303, 403 is hinged to the external wall 4, 104, 204, 304, 404 at a first edge 3a, 103a, 203a, 303a, 403a thereof.

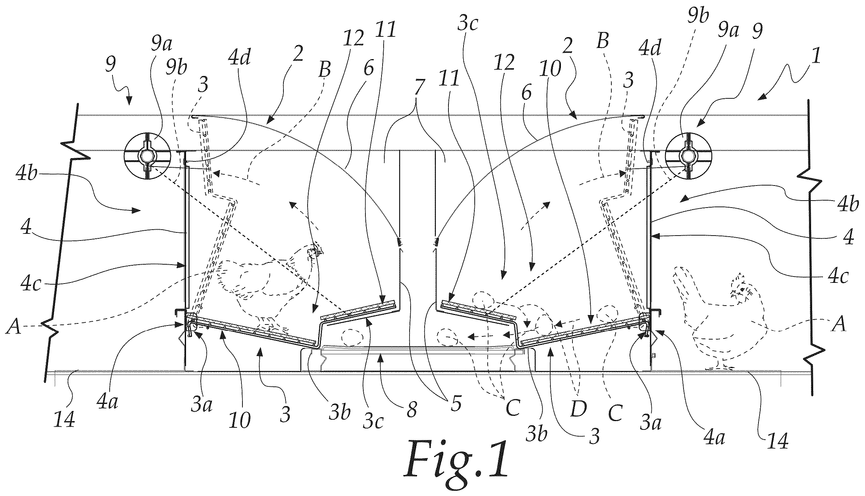

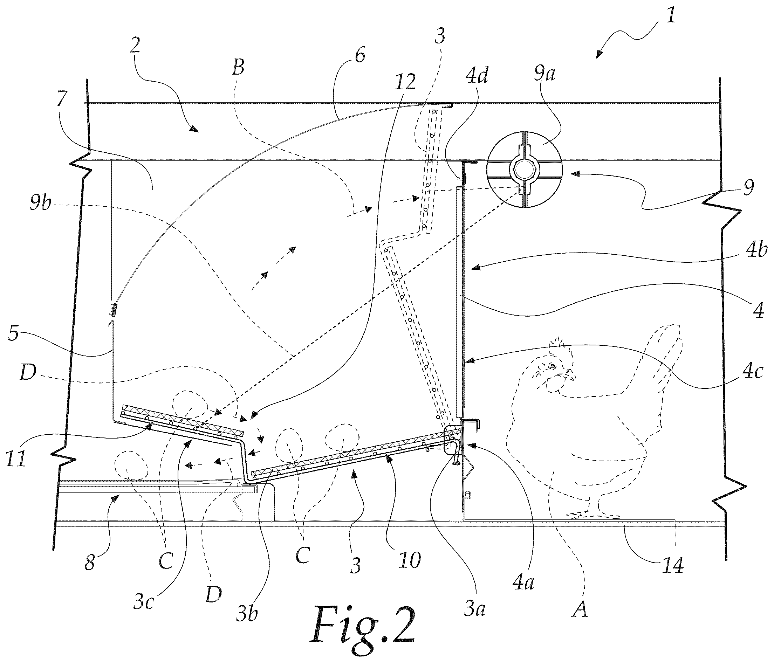

With particular reference to Figures 1 to 3, the term "external wall" 4, 104 in this text means the wall of the nest 2, 102, usually vertical, that is provided with one or more openings 4b, 104b for the ingress and egress of the animals A into and out of the nest 2, 102.

Furthermore, such openings 4b, 104b usually have curtains 4c, 104c for closure.

Moreover, the term "internal wall" 5, 105, 305, 405 means the wall opposite from the external wall 4, 104, 304, 404 in the direction of the bottom 3, 103, 303, 403, generally parallel to the external wall 4, 104, 304, 404.

The enclosure of each nest 2, 102, 302, 402 is completed by an upper cover 6, 106, 306, 406 which is usually joined to the internal wall 5, 105, 305, 405.

This upper cover 6, 106, 306, 406 vertically closes the nest 2, 102, 302, 402.

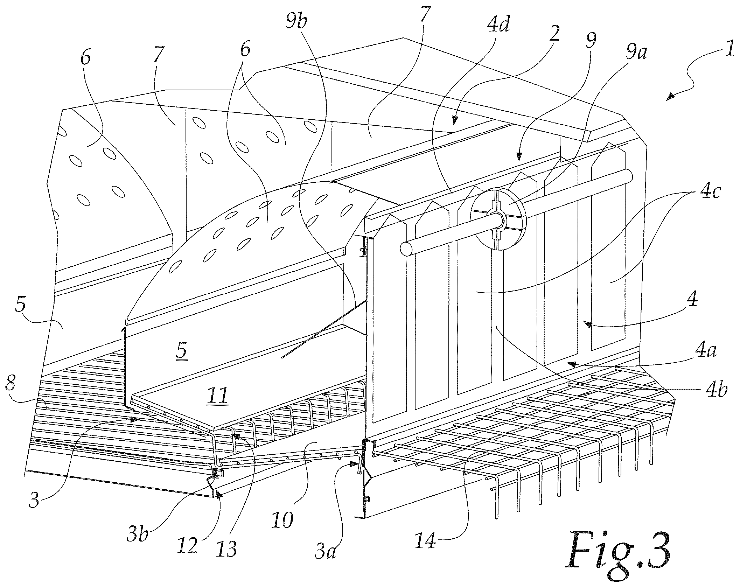

With reference to the embodiment shown in Figure 3, each nest 2 is comprised between two side walls 7, parallel and mutually opposite.

These side walls 7 are at right angles to the internal wall 5 and to the external wall 4 and each positioned at a lateral end of the bottom 3.

Conveniently, the terms "horizontal", "vertical", "upper", "lower" and other indications of relative positions between components used in this description are always used with reference to each module 1, 101, 201, 301, 401 in its status of use.

Furthermore, there is at least one collection belt 8, 108, 208, 308, 408 which is positioned proximate to a second edge 3b, 103b, 203b, 303b, 403b of the bottom 3, 103, 203, 303, 403 opposite the first edge 3a, 103a, 203a, 303a, 403a.

More specifically, each collection belt 8, 108, 208, 308, 408 slides in the corresponding module 1, 101, 201, 301, 401, winding around two first rollers, not shown in the figures.

These first rollers are generally arranged proximate to the front ends of the module 1, 101, 201, 301, 401, and they move the collection belt 8, 108, 208, 308, 408.

The term "front ends" refers to the vertical sides of the module which are opposite each other and perpendicular to the external walls 4, 104, 204, 304, 404.

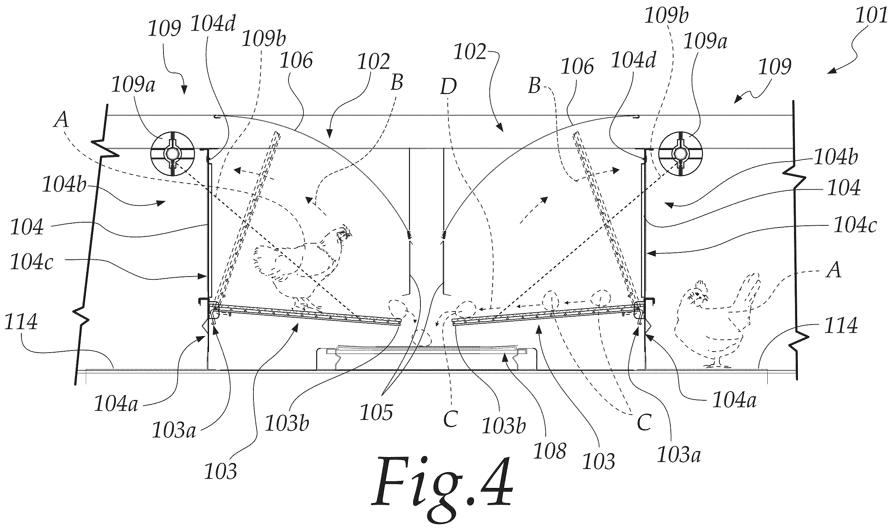

In more detail, with particular reference to Figures 1 to 4, the bottom 3, 103 is hinged to the external wall 4, 104 proximate to the openings 4b, 104b.

Conveniently, the bottom 3, 103 can perform a rotation B between an egg-laying position and a closed position, the latter shown in dotted lines in Figures 1, 2 and 4.

In detail, in the egg-laying position the bottom 3, 103 is inclined toward the collection belt 8, 108, in such a manner as to guide the eggs C laid thereon toward the collection belt 8, 108.

In the same way, in the closed position, shown in dotted lines in Figures 1, 2 and 4, the bottom 3, 103 assumes a substantially vertical orientation, in such a manner as to close the openings 4b, 104b and prevent the animals A from reentering the nest 2, 102 until it is reopened.

In more detail the collection belt 8, 108 is positioned close to the second edge 3b, 103b of the bottom 3, 103 in order to minimize the risk that the eggs C might be broken during the travel D from the bottom 3, 103 to the collection belt 8, 108.

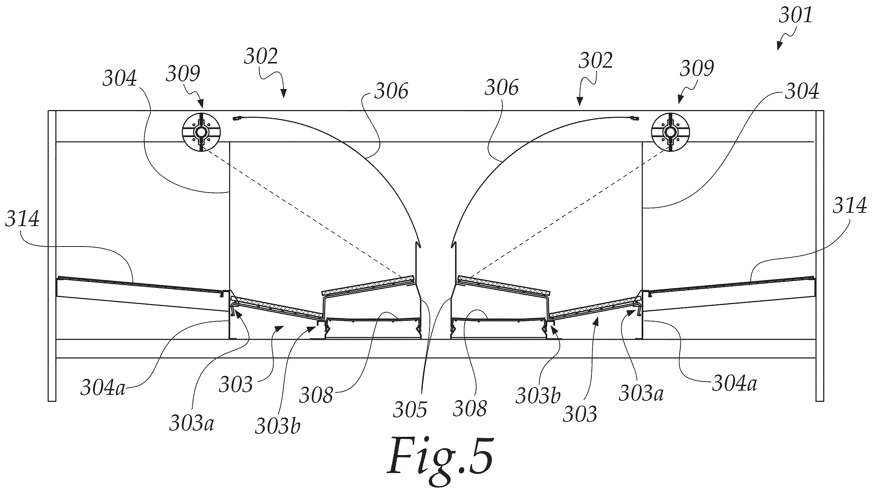

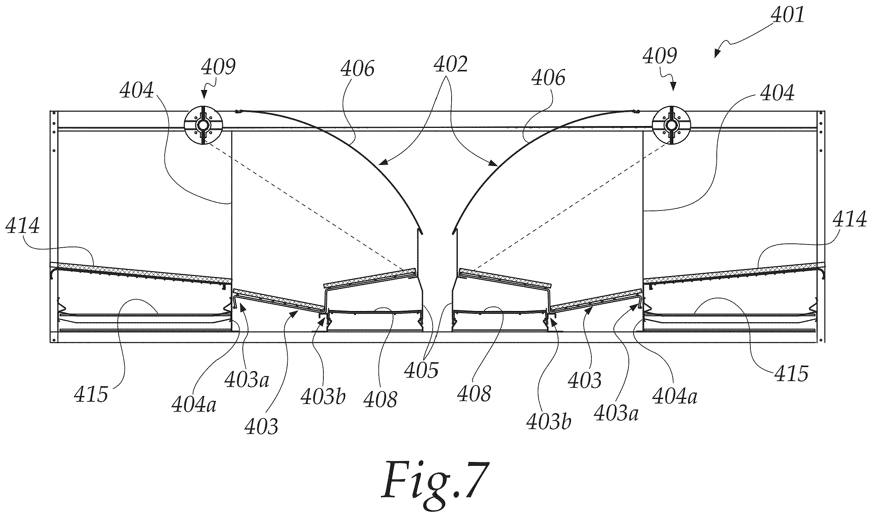

With reference to the embodiments shown in Figures 5 and 7, there are at least two nests 302, 402, mutually opposite from each other so as to define two parallel rows, and there are two collection belts 308, 408, each one of them positioned close to the second edge 303b, 403b of a bottom 303, 403.

There are also movement means 9, 109, 209, 309, 409 for moving the bottom 3, 103, 203, 303, 403.

Such movement means 9, 109, 209 can be of various types, such as for example a rack and pinion mechanism, not shown in the figures, or a tension member actuated by a pulley, as shown schematically in the figures and explained in more detail below.

One of the particularities of the nest module 1, 101, 201, 301, 401 according to the invention consists in that the nest 2, 102, 202, 302, 402 is at least partially superimposed on the collection belt 8, 108, 208, 308, 408.

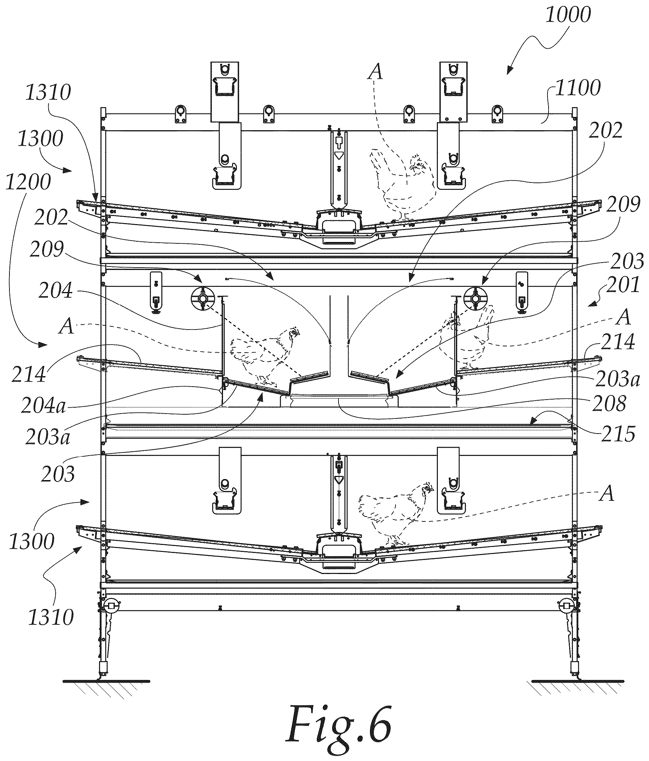

More specifically, with reference to Figures 1 to 4 and to Figure 6, each bottom 3, 103, 203 of the nests 2, 102, 202 is at least partially superimposed on the single collection belt 8, 108, 208 when the bottom 3, 103, 203 is in the egg-laying position.

In the same way, with reference to Figures 5 and 7, each bottom 303, 403 of the nests 302, 402 is at least partially superimposed on a corresponding collection belt 308, 408 when the bottom 303, 403 is in the egg-laying position.

In this manner, each collection belt 308, 408 is surmounted by at least some of the bottom 303, 403 of each nest, and delimited on one of its sides by the internal wall 305, 405, thus preventing the feces deposited on the upper cover 306, 406 from falling onto the collection belt 308, 408, so fouling it and also fouling the eggs C carried on it.

In this way at least one part of the walkable surface of each nest 2, 102, 202, 302, 402 is coincident in plan view with the underlying part of the collection belt 8, 108, 208, 308, 408, so reducing the total extension of the surface that is not usable to accommodate animals A as stipulated by the regulations described above.

Conveniently, the movement means 9, 109 comprise a pulley 9a, 109a, which is associated so that it can rotate with the module 1, 101 proximate to the upper end 4d, 104d of the external wall 4, 104.

Furthermore, the movement means 9, 109 comprise at least one tension member 9b, 109b which is actuated by the pulley 9a, 109a and is associated with the bottom 3, 103, at a distal portion 3c, 103c of the bottom 3, 103 with respect to the first edge 3a, 103a.

More specifically, each tension member 9b, 109b can be for example a chain or a cable, made of a plurality of different materials including for example steel or polymeric materials.

Advantageously, with particular reference to Figures 1 to 3, the bottom 3 can comprise a first plane 10 and a second plane 11, distinct and separate from the first plane 10.

The first plane 10 comprises the first edge 3a.

The second plane 11 defines a second arrangement which is incident with respect to a first arrangement defined by the first plane 10.

The first plane 10 and the second plane 11 are at least vertically offset with respect to each other at their mutually facing edges 12.

Particularly, the second edge 3b corresponds to one of the mutually facing edges 12.

In more detail, the second edge 3b corresponds to the edge of the first plane 10 that is parallel to and opposite from the first edge 3a.

Advantageously, with particular reference to Figure 3, the first plane 10 and the second plane 11 are integral with each other and delimit at least one slot 13.

More specifically, each slot 13 extends at the second edge 3b from the first plane 10 towards the second plane 11 for at least a part of the extension of the second edge 3b.

Conveniently, such slot 13 is spaced apart from the external wall 4 in the direction of the first plane 10 and from the internal wall 5, opposite from the external wall 4, in the direction of the second plane 11.

Moreover, the module 1, 101, 201, 301, 401 comprises at least one grid-like surface 14, 114, 214, 314, 414 which is adjacent to the external wall 4, 104, 204, 304, 404 proximate to the first edge 3a, 103a, 203a, 303a, 403a.

Such grid-like surface 14, 114, 214, 314, 414 extends from the external wall 4, 104, 204, 304, 404 in the opposite direction to the bottom 3, 103, 203, 303, 403.

Furthermore, the grid-like surface is fixed and integrally connected to the external wall 4, 104, 304, 404.

More specifically, this grid-like surface 14, 114, 214, 314, 414 can be for example a grille or a netting, and can be made of a plurality of materials, such as for example metal or polymeric materials.

Advantageously, with particular reference to Figures 6 and 7, the module 201, 401 can comprise at least one covering belt 215, 415, positioned in a lower region with respect to the at least one grid-like surface 214, 414.

Such covering belt 215, 415 extends substantially for the entire extension of each grid-like surface 214, 414, for the portion thereof that is contained within the module 201, 401, so as to block the falling of materials, such as droppings, that should pass through it.

In the embodiment shown in Figure 6, there is a single covering belt 215, and it extends substantially for the entire extension of the module 201, thus comprising the extension of the two grid-like surfaces 214 shown.

In the embodiment shown in Figure 7, there are at least two grid-like surfaces 414 and two covering belts 415, each one extending parallel to the other substantially for the entire extension of its overlying grid-like surfaces 414.

In this manner the grid-like surfaces 214, 414 become surfaces that are usable for accommodating animals A under the regulations cited above.

Particularly, the covering belt 215, 415 can be made of polymeric material, such as for example polypropylene.

Conveniently, the covering belt 215, 415 can slide with respect to the module 201, 401.

In more detail, each covering belt 215, 415 slides in the corresponding module 201, 401, below the grid-like surfaces 214, 414, wound around two second rollers, not shown in the figures.

These second rollers are generally arranged proximate to the front ends of the module 201, 401, and they move the covering belt 215, 415 parallel to the collection belt 208, 408.

Optionally, if the module 201, 401 is made up of a plurality of nests 202, 402, arranged side by side at least along the direction of motion of the collection belt 208, 408, then each covering belt 215, 415 extends uninterrupted under all the nests 201, 401, below the corresponding grid-like surfaces 214, 414.

In other words, whatever the dimensions of the module 201, 401 and whatever the arrangement of the nests 202, 402, each covering belt 215, 415 extends uninterrupted from one front end of the module to the one opposite it, in order to collect the dirt and feces and convey them outside the system.

In the same way, if the module is made up of a plurality of nests 2, 102, 202, 302, 402, arranged side by side at least along the direction of motion of the collection belt 108, 208, 308, 408, each collection belt 108, 208, 308, 408, extends uninterrupted under all the nests 102, 202, 302, 402, in order to collect the eggs and convey them outside the system.

In the embodiments described previously, both the first rollers, for moving the collection belt 8, 108, 208, 308, 408, and the second rollers, for moving the covering belt 215, 415, are generally arranged at the ends of each module 1, 101, 201, 201, 301, 401.

It is also possible for there to be additional first rollers and additional second rollers in intermediate positions along the extension of each module 1, 101, 201, 201, 301, 401.

Each of the first rollers and each of the second rollers can have both an active movement function and a passive guiding and supporting function.

With particular reference to the embodiment shown in Figure 7, there are at least two nests 402, mutually opposite from each other so as to define two parallel rows, and two covering belts 415, each one arranged below the grid-like surfaces 414 corresponding to a row of nests 402.

The module 201 thus described can be used in a poultry farming system 1000, which comprises a supporting structure 1100 extending on one or more levels 1200 and 1300.

Conveniently, at least one first level 1200 comprises a module 201 as previously described.

Furthermore, such poultry farming system 1000 can have at least one second level 1300 set up for different purposes.

With reference to the embodiment shown in Figure 6, there are two second levels 1300 which comprise halt areas 1310.

Moreover, the module 201 can comprise at least two nests 202, which are opposite from each other on two rows that are parallel to each other along the collection belt 208, which is arranged centrally with respect to such rows.

The system thus constructed makes it possible to at least partially superimpose the nests 202 over the collection belt 208, thus minimizing the surface taken up by the nests 202.

Optionally, the system can comprise a module that comprises two collection belts.

A module 401 of this type is shown in Figure 7.

In this manner, each collection belt 408 is surmounted by at least some of the bottom 403 of at least one nest 402, and delimited on one of its sides by an internal wall 405.

Conveniently, this shape structure prevents the dirt that is deposited on the upper cover 406 from falling onto the collection belts 408, fouling them and fouling the eggs present on them.

With particular reference to the embodiment shown in Figure 6, it is possible, for the same width of the system 1000, to maximize the extension of the grid-like surfaces 214, which are rendered usable via the use of the covering belt 215.

Alternatively, if the grid-like surfaces 214 are kept unchanged, it is possible to reduce the total width of the system 1000.

In this manner, it is possible to arrange a greater number of systems 1000 side by side in the same shed.

Advantageously, the module 201 can comprise a covering belt 215 that extends for the entire extension of the module 201.

The operation of the nest module according to the invention is clear and evident from the foregoing description.

In more detail, both the collection belt and the covering belt can be continuously moving, but they can also be selectively actuated based on the needs of the farmer, and also independently of each other.

From the foregoing it is clear that the objective of providing an improved nest module is reached and achieved, differently from the prior art.

In practice it has been found that the invention fully achieves the intended aim and objects by providing a nest module that, by virtue of an innovative placement of the nests, with the bottom partially superimposed on the egg collection belt, increases the usable surface for the purposes of calculation of the number of animals that can be contained in the system, with respect to similar, conventional systems.

An advantage of the invention consists in that the chosen arrangement for each nest makes it possible to increase the usable surface of the level on which the nest module is arranged, so decreasing the surface given over exclusively to the collection belt, and therefore not usable, without however reducing the dimensions of the belt.

Another advantage of the invention consists in that, if the rotating bottom of each nest is of the type with double-inclination, the risks of injury to the animals are reduced.

An additional advantage with respect to the systems based on a conventional double-inclination rotating bottom is the absence of the transfer netting, which reduces the risks deriving from fouling and the difficulties in cleaning such netting.

Not least an advantage over conventional systems is the absence of portions of the belt that are not covered, which reduces the sources of fouling of the eggs, so increasing their quality.

The invention thus conceived is susceptible of numerous modifications and variations, all of which are within the scope of the appended claims. Moreover, all the details may be substituted by other, technically equivalent elements.

In practice, the materials used, as well as the contingent shapes and dimensions, may be any according to the requirements and to the state of the art.

The disclosures in Italian Patent Application No. 102025000007209 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A nest module (1, 101, 201, 301, 401), particularly for an egg-laying hen farm system (1000), comprising:
- at least one nest (2, 102, 202, 302, 402) having a rotating bottom (3, 103, 203, 303, 403) which is associated so that it can rotate with a lower end (4a, 104a, 204a, 304a, 404a) of an external wall thereof (4, 104, 204, 304, 404); said bottom (3, 103, 203, 303, 403) being hinged to said external wall (4, 104, 204, 304, 404) at a first edge (3a, 103a, 203a, 303a, 403a) thereof;
- at least one collection belt (8, 108, 208, 308, 408), positioned proximate to a second edge (3b, 103b, 303b, 403b) of said bottom (3, 103, 203, 303, 403) opposite to said first edge (3a, 103a, 203a, 303a, 403a);
- movement means (9, 109, 209, 309, 409) for said bottom (3, 103, 203, 303, 403);
said module (1, 101, 201, 301, 401) being **characterized in that** said at least one nest (2, 102, 202, 302, 402) is at least partially superimposed on said at least one collection belt (8, 108, 208, 308, 408).

2. The module (1, 101) according to claim 1, **characterized in that** said movement means (9, 109) comprise:
- a pulley (9a, 109a), associated so that it can rotate with said module (1, 101) proximate to the upper end (4d, 104d) of said external wall (4, 104);
- at least one tension member (9b, 109b) actuated by said pulley (9a, 109a) and associated with said bottom (3, 103) at a distal portion (3c, 103c) of said bottom (3, 103) with respect to said first edge (3a, 103a).

3. The module (1) according to claim 1 or 2, **characterized in that** said bottom (3) comprises a first plane (10) and a second plane (11), distinct and separate from said first plane (10); said first plane (10) comprising said first edge (3a); said second plane (11) defining a second arrangement which is incident with respect to a first arrangement defined by said first plane (10); said first plane (10) and said second plane (11) being at least vertically offset with respect to each other at their mutually facing edges (12); said second edge (3b) corresponding to one of said mutually facing edges (12).

4. The module (1) according to claim 3, **characterized in that** said first plane (10) and said second plane (11) are integral with each other and delimit at least one slot (13); said at least one slot (13) extending at said second edge (3b) from said first plane (10) towards said second plane (11) for at least a part of the extension of said second edge (3b).

5. The module (1, 101, 201, 301, 401) according to one or more of the preceding claims, **characterized in that** it comprises at least one grid-like surface (14, 114, 214, 314, 414) which is adjacent to said external wall (4, 104, 204, 304, 404) proximate to said first edge (3a, 103a, 203a, 303a, 403a) and extends from said external wall (4, 104, 204, 304, 404) in the opposite direction to said bottom (3, 103, 203, 303, 403); said grid-like surface being of the fixed type and integrally connected to said external wall (4, 104, 204, 304, 404).

6. The module (201) according to claim 5, **characterized in that** it comprises at least one covering belt (215, 415), positioned in a lower region with respect to said at least one grid-like surface (214, 414); said at least one covering belt (215, 415) extending substantially over the entire extension of said at least one grid-like surface (214, 414) for the portion thereof that is contained within said module (201, 401).

7. The module (201, 401) according to claim 6, **characterized in that** said at least one covering belt (215, 415) can slide with respect to said module (201, 401).

8. The module (201, 401) according to claim 6 or 7, **characterized in that** said at least one covering belt (215, 415) is made of polymeric material.

9. A poultry farming system (1000) comprising a supporting structure (1100) extending on one or more levels (1200, 1300), **characterized in that** at least one first level (1200) comprises a module (201) according to one or more of the preceding claims.

10. The poultry farming system (1000) according to claim 9, **characterized in that** said module (201) comprises at least two nests (202), which are mutually opposite at said at least one collection belt (208).
